# FASCICULE DE BREVET EUROPEEN

(11) **EP 0 588 678 B1**
(45) Date de publication et mention de la délivrance du brevet: **08.11.2000**
(21) Numéro de dépôt: 93402110.6
(22) Date de dépôt: 27.08.1993
(51) Int. Cl.: C09J 109/00

(54) **Adhésifs souples monocomposants vulcanisables à base de polybutadiène liquide**
Vulkanisierbare biegsame Einkomponent-Klebstoffen auf Basis von flüssigem Polybutadien
Vulcanisable flexible one-component adhesives based on liquid polybutadiene

(30) Priorité: 04.09.1992 FR 9210588
(43) Date de publication de la demande: 23.03.1994
(73) Titulaire: Ato Findley S.A., 92800 Puteaux (FR)
(72) Inventeur: Chenard, Jean-Yves, F-64000 Pau (FR)
(74) Mandataire: Ohresser, François

(56) Documents cités:
- EP-A- 0 097 394
- CHEMICAL ABSTRACTS, vol. 108, no. 10, 7 Mars 1988, Columbus, Ohio, US; abstract no. 77325r, M.WATANABE 'Rubber-based water-swellable sealing materials wilt high strength' & JP-A-62 172 044 (SUMITOMO CHEMICAL CO., LTD.) 29 Juillet 1987
- ENCYL.POLYM.SCI.ENG., vol.4, 1986, pages 284 - 286

## Description

La présente invention concerne des adhésifs souples monocomposants améliorés formulés à partir de polybutadiènes liquides vulcanisables.

De tels adhésifs, que l'on range dans la catégorie des adhésifs souples car leurs allongements à la rupture excèdent très largement 10%, sont très utilisés pour le collage de tôles grasses n'ayant subi aucune préparation de surface spécifique: ils doivent répondre à des prescriptions très complexes concernant en particulier leur rhéologie de mise en oeuvre (débit par extrusion dans des conditions normalisées, coulure à froid et à chaud, stabilité au stockage...), leurs caractéristiques mécaniques massiques (souplesse, tenue au choc à basse température...), leurs performances de collage à diverses températures avant et après vieillissement chaud et humide (1, 2 et 3 semaines à 70°C, 95% RH) sur trois substrats différents (tôle d'acier, tôle galvanisée, tôle électrozinguée). A noter que les performances de collage incluent non seulement les résistances en traction cisaillement (TC) mais aussi les types de ruptures obtenus. Les ruptures doivent se produire dans l'adhésif et non à l'interface métal-colle, car seules les ruptures dans l'adhésif permettent de prévoir valablement le comportement à long terme des joints collés.

L'homme de l'art a retenu pour la réalisation de tels adhésifs des compositions à base polybutadiène vulcanisables par le soufre, largement appréciées, notamment dans l'industrie automobile. De tels produits sont décrits dans les brevets européens EP 97394 (EVODE) ou 256316 (HENKEL), ainsi que dans l'article "Liquid polybutadiene adhesives" (Int. J. Adhesion and Adhesives 4 (4), 148, 1984). Ils se caractérisent par une grande souplesse, une bonne tenue à basse température et par d'excellentes performances sur tôle d'acier tant à l'état neuf qu'après vieillissement chaud et humide. En construction automobile, on utilise de plus en plus des tôles préprotégées (galvanisées ou électrozinguées) qui assurent une meilleure protection contre la corrosion : les adhésifs précités donnent sur ces tôles de mauvais résultats après vieillissement chaud-humide (rupture partiellement ou totalement adhésive). On constate même des ruptures adhésives à l'état neuf lorsque les tôles galvanisées sont de fabrication récente: il est en effet connu de l'homme de l'art que les tôles galvanisées sont d'autant plus difficiles à coller qu'elles sont de fabrication récente et donc dépourvues de la couche d'oxyde superficiel qui se forme au cours du stockage et qui facilite l'accrochage de l'adhésif. Les remèdes proposés concernent surtout l'emploi de polybutadiènes fonctionnalisés par exemple hydroxylés, soit comme promoteurs d'adhésion (EP363892, Teroson), soit en tant que résines de base (EP 441244, PPG, ou WO 92 03514, EMS-TOGO), produits coûteux, et dont au surplus l'efficacité n'a pas été confirmée.

Nous avons maintenant trouvé qu'il était possible d'améliorer de façon spectaculaire les types de rupture obtenus sur tôles électrozinguées et galvanisées, avec les polybutadiènes classiques par addition de petites quantités de silanes soufrés, et ce, sans aucun effet néfaste sur les autres performances (en particulier avec conservation de la souplesse du collage et de la stabilité au stockage sur plusieurs mois à température ambiante) des formules ainsi modifiées. Les formules selon l'invention comprennent typiquement les constituants suivants:
* un polybutadiène liquide,
* du soufre en poudre,
* un ou plusieurs accélérateurs de vulcanisation,
* des activateurs
* des charges et additifs,
* un silane soufré,
   et de façon optionnelle,
* du polybutadiène solide de haute masse moléculaire.

Le polybutadiène liquide utilisé dans les formulations selon l'invention a une viscosité à température ambiante de 0,5 à 50 Pa.s. Sa masse moléculaire moyenne est comprise entre 1.000 et 10.000. La configuration moléculaire employée dépend de la souplesse à basse température demandée à l'adhésif réticulé. Il est connu que les butadiènes cis 1-4 offrent, après vulcanisation, la plus grande souplesse et la température de transition vitreuse la plus basse. Toutefois, lorsque l'application le permet, on peut utiliser des polybutadiènes contenant jusqu'à 60 % de structure trans 1-4 et/ou de structure vinyl 1-2 (jusqu'à 30 %). Le polybutadiène liquide utilisé dans les exemples donnés plus loin présente les caractéristiques suivantes:

| | |
|---|---|
| Viscosité à 25°C | ∼3 Pa.s |
| Masse moléculaire | ∼3.000 |
| Structures cis 1-4 | 75 % |
| Structures trans 1-4 | 24 % |
| Structures vinyl 1-2 | 1 % |

Le soufre élémentaire en poudre est utilisé à raison de 5 à 20 parties pour 100 parties de polybutadiène.

Les accélérateurs de vulcanisation sont choisis parmi les produits classiquement utilisés en vulcanisation tels que le 2-mercaptobenzothiazole (MBT), le disulfure de dibenzothiazole (MBTS), le zinc 2-mercaptobenzothiazole, le tétraméthylthiurame disulfure, le 2-cyclohexylbenzothiazylsulfènamide (CBS), la 2-tertiobutylbenzothiazylsulfènamide, le 2-sulfènebenzothiazylmorpholide, la diphénylguanidine (DPG) et autres analogues. On les utilise seuls ou en mélange dans des proportions de 2 à 20% en poids par rapport au polybutadiène total.

Les activateurs sont généralement constitués d'un mélange d'oxydes métalliques; on utilise en particulier des mélanges d'oxyde de calcium et d'oxyde de zinc, respectivement de 15 à 30% et 10 à 20% en poids par rapport au polybutadiène total.

Les charges et additifs sont des constituants ordinaires de ces adhésifs. On utilise habituellement à titre de charges des mélanges de carbonate de calcium, traité ou non à l'acide stéarique, de talc, de noir de carbone, de silice fumée, de pigments. Les additifs sont des produits également banals en ce domaine : antioxydants, agents gonflants, antiozonants, plastifiants, etc... Charges et additifs divers représentent de 50 à 300 % du poids du polybutadiène.
* Le polybutadiène solide de haute masse moléculaire est utilisé de façon optionnelle pour ajuster à la demande la viscosité de l'adhésif. On peut ajouter des quantités allant jusqu'à 20 % en poids par rapport au polybutadiène liquide précédent, sans modifier sensiblement les autres caractéristiques de la composition. Le polybutadiène solide utilisé dans les exemples 2 et 3 qui suivent possède les caractéristiques suivantes:

| | |
|---|---|
| Masse moléculaire (en nombre) | 165.000 |
| Masse moléculaire (en poids) | 275.000 |
| Structures cis 1-4 | 95 % |
| Structures trans 1-4 | 3 % |
| Structures vinyl 1-2 | 2 % |

Les silanes soufrés utilisés comme promoteurs d'adhésion sont les éléments caractéristiques de l'invention. Ils appartiennent au groupe constitué par les 3-mercaptopropylméthyldialkoxysilanes HS-(CH₂)₃-Si(CH₃)(OR)₂, les 3-mercaptopropyltrialkoxysilanes HS-(CH₂)₃-Si(OR)₃ et les bis [(trialkoxypropyl)-silane] polysulfures Sₙ[(CH₂)₃-Si(OR)₃]₂, dans lesquels R représente des groupes méthyle -CH₃ ou éthyle -C₂H₅ identiques ou différents, et où n peut prendre les valeurs 2, 3 ou 4. Les silanes soufrés préférés sont le bis [(triéthoxy)propylsilane]-tétrasulfure (ci-après dénommé silane n°1 ) et le 3-mercaptopropyltriéthoxysilane (ci-après dénommé silane n°2). Les quantités utiles sont comprises entre 0,3 et 3 % en poids par rapport au polybutadiène.

Les produits selon l'invention se présentent sous l'aspect d'une pâte thixotrope ayant l'aspect d'un mastic. Ils s'appliquent soit à l'aide de cartouches extrudables par pistolet manuel, soit à l'aide de machines de dépose robotisées (pompes à engrenages ou autres).

On évalue les performances des formules adhésives suivant, entre autres, des tests de traction/cisaillement, d'adhésion après vieillissement humide, de pliure sur mandrin, de tenue au choc à froid. Les procédures correspondantes sont sommairement décrites ci-après.

### a) Tests de traction/cisaillement sur tôles minces (TC)

Les substrats utilisés sont la tôle d'acier à faible taux de carbone (dénommée ci-après XES), la tôle galvanisée deux faces (dénommée G2F; épaisseur du dépôt de zinc 10 mm) et la tôle électrozinguée deux faces (dénommée EZ2; épaisseur du dépôt de zinc 10 mm). Toutes les tôles utilisées ont une épaisseur de 0,7 mm et sont de fabrication récente (< 3 mois). Les adhésifs sont appliqués à 50°C. On opère sur des tôles huilées par immersion dans une solution d'huile ASTM n°3 à 10% dans l'heptane. Les joints collés ont les caractéristiques géométriques suivantes:
- surface 5 cm² (2,5 x 2 cm)
- épaisseur 2 mm.

Deux cuissons ont été utilisées: soit 25 min à 170°C, soit 1 h à 200°C en étuve. Les résistances en traction cisaillement indiquées dans les exemples sont mesurées à 25°C (sauf mention contraire) en mégapascals (MPa); une valeur de 1 MPa est considérée comme un minimum pour l'application visée.

### b) Test de vieillissement à la chaleur humide

Le test décrit est connu sous le nom de test du "cataplasme humide". II consiste à entourer le joint collé avec du coton hydrophile, à le placer en présence d'eau dans une poche scellée en polyéthylène, puis à le laisser vieillir pendant une semaine (H7), deux semaines (H14) ou trois semaines (H21) à 70°C, en veillant à ce que le coton reste constamment humide. Au terme de ce vieillissement, le joint collé subit un choc thermique de 2 heures à -20°C. II est ensuite conditionné à température ambiante puis tractionné à 10 mm/min. La référence utilisée est la résistance en traction cisaillement du joint à l'état neuf (notée H0). Comme indiqué précédemment, les types (ou faciès) de rupture ont une grande importance. On les note de la façon suivante:
* rupture cohésive (RC): la rupture a lieu dans la colle;
* rupture cohésive superficielle (RCS): la rupture a lieu dans la colle mais au voisinage de l'interface métallique (sans que le métal apparaisse);
* rupture adhésive (RA): la rupture a lieu à l'interface colle métal avec apparition du métal nu.

Seules les ruptures RC ou RCS sont autorisées. Dans le cas fréquent où la rupture est mixte, on indique le faciès de rupture prédominant et la proportion correspondante: par exemple, une rupture notée RC 80 % signifie rupture cohésive à 80 % avec 20 % de rupture adhésive; une rupture notée RA 60 % signifie rupture adhésive à 60 % avec 40 % de rupture cohésive ou cohésive superficielle.

### c) Pliure sur mandrin

La souplesse du produit est évaluée par un test de pliure sur mandrin. On opère par pliure sur un mandrin de f 12,5 mm d'un cordon d'adhésif hémicylindrique de f 10 mm réticulé des tôles précédemment décrites. La notation des performances est la suivante:
* Type A: aucune fissure apparente après pliure;
* Type B : petites fissures superficielles;
* Type C : fissures atteignant le métal sans décol-lement;
* Type D : fissures atteignant le métal + décollement à l'interface métal/colle.

Seuls les comportements A et B sont autorisés.

### d) Tenue au choc à froid

On procède à -40°C de la façon suivante: on réticule une plaque d'adhésif de 80 x 80 x 2 mm déposée sur l'une des tôles précédentes. Après cuisson, l'ensemble tôle/adhésif est porté à -40°C puis impacté en son centre côté métal à l'aide d'un percuteur hémisphérique (masse = 1 kg, rayon de courbure = 85 mm) tombant d'une hauteur de 50 cm. On note la longueur des fissures éventuellement constatées sur la plaque d'adhésif. Cette longueur ne doit pas dépasser 10 mm, comptée à partir du centre de l'impact.

Les exemples qui suivent feront mieux comprendre l'invention.

### EXEMPLE 1

Cet exemple démontre l'intérêt du silane 1 pour améliorer les faciès de rupture sur tôle galvanisée. On mélange, à l'aide d'un malaxeur à 40-50°C les constituants suivants:

| ***Composants*** | ***Formule*** ***1-1*** | ***Formule*** ***1-2*** |
|---|---|---|
| Polybutadiène liquide à 99% de structure 1-4 | 1.000 g | 1.000g |
| Carbonate de calcium | 179 g | 179 g |
| Carbonate de calcium traité à l'acide stéarique (Winnofil SPM) | 982 g | 982 g |
| Oxyde de calcium | 179 g | 179 g |
| Oxide de zinc | 143 g | 143 g |
| Soufre broyé | 82 g | 82 g |
| MBTS | 103 g | 103 g |
| Irganox 1010 (antioxydant) | 18 g | 18 g |
| Silane n°1 | - | 18 g |

Les formulations sont soigneusement dégazées sous vide avant utilisation. On les évalue simultanément.

On observe que les deux produits ont un excellent comportement sur acier; que la souplesse sur mandrin et la tenue au choc à -40°C sont voisines; qu'en revanche l'amélioration apportée par le silane dans la formule 1-2 selon l'invention est très sensible en ce qui concerne le comportement au vieillissement humide, ainsi qu'en témoigne le tableau ci-après des résistance en traction/cisaillement en MPa sur diverses tôles et diverses expositions.

| ***Formule*** | ***Formule 1-1*** | ***Formule 1-2*** | ***Formule 1-1*** | ***Formule 1-2*** |
|---|---|---|---|---|
| ***Cuisson*** | ***25 min à 170°C*** | | ***1 h à 200°C*** | |
| XES-HO | 0,64 | RC*90% | 0,95 | 0,95 RC* |
| HO | 1,4 RC 95% | 1,44 RC 90% | 1,39 RC | 1,63 RC |
| H7 | 1,31 RC | 1,18 RC | 1,38 RC | 1,41 RC |
| H14 | 1,2 RC | 1,36 RC | 1,73 RC | 1,62 RC |
| H21 | | 1,52 RCS | | 1,65 RC |
| G2F- HO | 1,34 RC 95% | 1,34 RC | 0,9 RA 95% | 1,75 RC |
| H7 | 1,06 RC 80% | 1,18 RC 95% | 0,96 RA 90% | 1,44 RC |
| H14 | 0,85 RA | 1,38 RC | 0,93 RA | 1,62 RCS 95 % |
| H21 | | 1,57 RC 90 % | | 1,42 RCS 75 % |
| EZ2-HO | | 1,09 RCS 70 % | | 1,39 RCS 95 % |
| H21 | | 1,38 RCS | | 1,41 RCS |

| | | | | |
|---|---|---|---|---|
| *TC mesurées à 80°C | | | | |

On constate que le comportement de la formulation 1-2 selon l'invention est très sensiblement meilleur que celui de la formule sans le silane soufré, en particulier sur galvanisé puisqu'on passe après 14 j de cataplasme humide (H14) de 0,85 MPa RA 100 % à 1,57 MPa RC 90 % après cuisson 170°C et de 0,93 MPa RA 100 % à 1,6 MPa RCS 95% après cuisson 200°C par addition du silane n°1 dans les proportions indiquées. Même à l'état neuf, les performances du produit sans silane sont catastrophiques, après cuisson 200°C sur galvanisé, tandis que le comportement avec silane est excellent.

Un point particulièrement favorable concerne l'évo-lution des tractions/cisaillements obtenues entre H7 et H21. On remarque qu'en l'absence de silane, il y a décroissance continue des valeurs obtenues sur galvanisé au fur et à mesure que le temps passe. Avec silane au contraire, on constate une parfaite stabilité ou même une remontée lente mais régulière des tractions/cisaillements obtenues ce qui est un signe de l'excellente tenue à l'humidité des formules selon l'invention.

### EXEMPLE 2

Cet exemple expose des formulations plus visqueuses que les précédentes grâce à l'addition du polybutadiène solide précité.

Les compositions de l'essai diffèrent de celles de l'exemple 1 comme indiqué ci-dessous:

| ***Composants*** | ***Formule*** ***2-1*** | ***Formule*** ***2-2*** | ***Formule*** ***2-3*** |
|---|---|---|---|
| Polybutadiène liquide à 99% | 950 g | 950 g | 950 g |
| Polybutadiène solide | 50 g | 50 g | 50 g |
| Carbonate de calcium | 803 g | 803 g | 803 g |
| Winnofil SPM | 803 g | 803 g | 803 g |
| Oxyde de calcium | 179 g | 179 g | 179 g |
| Oxyde de zinc | 143 g | 143 g | 143 g |
| Soufre broyé | 82 g | 82 g | 82 g |
| MBTS | 103 g | 103 g | 103 g |
| Silice fumée | 18 g | 18 g | 18 g |
| Irganox 1010 | 18 g | 18 g | 18 g |
| Silane n°1 | - | 18 g | - |
| Silane n°2 | - | - | 18 g |

Les trois formules présentent une excellente souplesse et une parfaite tenue au choc à -40°C. Mais le tableau ci-dessous où sont portés les résultats de l'essai de cataplasme humide après cuisson de 1 heure à 200°C témoignent là encore l'effet bénéfique de chacun des deux silanes sur l'adhésion sur galvanisé, puisqu'on passe d'une rupture adhésive à 60% à une rupture cohésive superficielle à 100 % après cataplasme humide H14 et H21.

| ***Formules*** | ***2-1*** | ***2-2*** | ***2-3*** |
|---|---|---|---|
| XES-HO | 1,62 RC | 1,72 RC | 1,79 RC |
| GEF-HO | 1,60 RC | 1,66 RC | 1,74 RC |
| H14 | 1,30 RA 60% | 1,46 RCS | 1,60 RCS |
| H21 | 1,25 RA 80% | 1,58 RCS | 1,87 RCS |

### EXEMPLE 3

Dans cet exemple, on présente les performances détaillées d'un adhésif identique à la formule 2-2 précédente mais contenant moitié moins du silane n°1 (soit 9 g pour 1.000 g du mélange polybutadiène liquide + polybutadiène solide). Les propriétés de l'adhésif s'évaluent comme suit :
* Tenue au choc à -40°C: pas de fissuration.
* Pliure sur mandrin: correcte (A ou B selon cuisson).
* Taux de gonflement (cuisson 200°C) : 5 %
* Débit à 50°C, sous 3 bars avec buse f 3 mm: 156 g/min
* Chute de débit :
- après 72 h 45°C : 6 %
- après 24 h 65°C : 12 %

* Les résistances en traction/cisaillement et les faciès de rupture après épreuve de cataplasme humide sont résumées sur le tableau ci-après.

| | ***ACIER XES*** | | ***G2F*** | | ***EZ2*** | |
|---|---|---|---|---|---|---|
| **Cuisson** | 25min 170°C | 1h 200°C | 25min 170°C | 1h 200°C | 25min 170°C | 1h 200°C |
| **HO** | 1,5 RC 100% | 1,6 RC 100% | 1,4 RC 100% | 1,5 RC 100% | 1,4 RC 100% | 1,5 RC 100% |
| **H7** | 1,2 RC 100% | 1,2 RC 100% | 1,4 RC 100% | 1,2 RC 100% | 1,2 RC 100% | 1,1 RC 100% |
| **H14** | 1,25 RC 100% | 1,3 RC 100% | 1,45 RC 100% | 1,45 RC 100% | 1,4 RC 100% | 1,25 RC 100% |
| **H21** | 1,4 RC 100% | 1,5 RC 100% | 1,5 RC 100% | 1,6 RC 100% | 1,4 RC 100% | 1,3 RC 100% |

On remarquera l'excellente tenue à l'humidité de la formule selon l'invention ainsi que sa bonne stabilité au stockage à 45 et 65°C typique des silanes selon l'invention.
* Caractéristiques mécaniques de l'adhésif en masse:
Elles ont été déterminées sur éprouvettes haltères d'épaisseur 3 mm injectées sous pression dans une empreinte et réticulées 1 heure à 200°C. On a obtenu les valeurs moyennes suivantes:

| | |
|---|---|
| - Contrainte à la rupture: | 1,3 MPa |
| - Allongement à la rupture: | 85 % |
| - Module à 2 % d'allongement: | 3 MPa |

Les adhésifs selon l'invention trouvent leur emploi, notamment en construction automobile et plus particulièrement au collage en joint épais ("dit calage") des raidisseurs pour ouvrants (capots, coffres, etc...); ces collages sont effectués avant dégraissage/phosphatage et mise en peinture de la carrosserie.

## Revendications

1. Adhésifs souples monocomposants vulcanisables à chaud composés de polybutadiène liquide, de soufre en poudre, d'accélérateurs de vulcanisation, d'activateurs, de charges et d'additifs, accessoirement de polybutadiène solide, caractérisés en ce qu'ils contiennent en outre, à titre de promoteur d'adhésion, des silanes soufrés pris dans le groupe constitué par les 3-mercaptopropylméthyldialkoxysilanes HS-(CH₂)₃-Si(CH₃)(OR)₂, les 3-mercaptopropyltrialkoxysilanes HS-(CH₂)₃-Si(OR)₃ et les bis [(trialkoxypropyl)silane] polysulfures Sₙ[(CH₂)₃-Si(OR)₃]₂, dans lesquels R représente des groupes méthyle - CH₃ ou éthyle -C₂H₅ identiques ou différents, et où n peut prendre les valeurs 2, 3 ou 4.

2. Adhésifs selon la revendication 1, caractérisés en ce que le silane soufré est le bis [(triéthoxy)propylsilane]tétrasulfure.

3. Adhésifs selon la revendication 1, caractérisés en ce que le silane soufré est le 3-mercaptopropyltriéthoxysilane.

4. Adhésifs selon l'une ou l'autre des revendications 1 à 3, caractérisés en ce qu'ils contiennent un silane soufré en quantités comprises entre 0,3 et 3% en poids par rapport au polybutadiène.

5. Application des adhésifs tels que décrits dans les revendications 1 à 4 au collage des tôles galvanisées ou électrozinguées.

## Claims

1. Heat-vulcanizable single-component flexible adhesives composed of liquid polybutadiene, of sulphur powder, of vulcanization accelerators, of activators, of fillers, of additives and, if necessary, of solid polybutadiene, characterized in that they additionally comprise, as adhesion promoter, sulphur-comprising silanes taken from the group consisting of 3-mercaptopropylmethyldialkoxysilanes HS-(CH₂)₃-Si(CH₃)(OR)₂, 3-mercaptopropyltrialkoxysilanes HS-(CH₂)₃-Si(OR)₃ and bis(trialkoxysilylpropyl) polysulphides Sₙ[CH₂)₃-Si(OR)₃]₂, in which R represents methyl -CH₃ or ethyl -C₂H₅ groups, which are identical or different, and where n can take the values 2, 3 or 4.

2. Adhesives according to Claim 1, characterized in that the sulphur-comprising silane is bis(triethoxysilylpropyl) tetrasulphide.

3. Adhesives according to Claim 1, characterized in that the sulphur-comprising silane is 3-mercaptopropyltriethoxysilane.

4. Adhesives according to any one of Claims 1 to 3, characterized in that they comprise a sulphur-comprising silane in amounts of between 0.3 and 3% by weight with respect to the polybutadiene.

5. Application of the adhesives as described in Claims 1 to 4 in the adhesive bonding of galvanized or electrogalvanized sheet metal.

## Patentansprüche

1. Warmvulkanisierbare, weiche Einkomponentenklebstoffe aus flüssigem Polybutadien, Schwefelpulver, Vulkanisierungsbeschleunigern, Aktivatoren, Füllstoffen und Additiven und daneben festem Polybutadien, dadurch gekennzeichnet, daß sie ausserdem als Adhäsionsfördermittel schwefelbaltige Silane enthalten, ausgewählt aus der Gruppe von 3-Mercaptopropylmethyldialkoxysilanen HS-(CH₂)₃-Si(CH₃)(OR)₂, 3-Mercaptopropyltrialkoxysilanen HS-(CH₂)₃-Si(OR)₃ und Bis[(trialkoxypropyl)silan]polysulfiden Sₙ[(CH₂)₃-Si(OR)₃]₂, wobei R Methyl-(-CH₃) oder Ethylgruppen (-C₂H₅), identisch oder verschieden, darstellt, wobei n die Werte 2, 3 oder 4 haben kann.

2. Klebstoffe nach Anspruch 1, dadurch gekennzeichnet, daß das schwefelhaltige Silan das Bis[(triethoxy)propylsilan]tetrasulfid ist.

3. Klebstoffe nach Anspruch 1, dadurch gekennzeichnet, daß das schwefelhaltige Silan das 3-Mercaptopropyltriethoxysilan ist.

4. Klebstoffe nach einem der Ansprüche 1 bis 3, dadurch gekennzeichnet, daß sie ein schwefelhaltiges Silan in Mengen von 0,3 bis 3 Gew.-% enthalten, bezogen auf das Polybutadien.

5. Verwendung der Klebstoffe nach den Ansprüchen 1 bis 4 zum (Ver-)Kleben von galvanisierten oder elektroverzinkten Blechen.
